# EUROPEAN PATENT APPLICATION

(11) **EP 4 787 368 A1**
(43) Date of publication of application: **05.08.2026**
(21) Application number: 26153294.9
(22) Date of filing: 21.01.2026
(51) Int. Cl.: G10L 15/26, G06F 40/284

(54) **SPEECH-TEXT ALIGNMENT ENGINE IN AN ARTIFICIAL INTELLIGENCE SYSTEM**

(30) Priority: 29.01.2025 US 202519040263
(71) Applicant: Microsoft Technology Licensing, LLC, Redmond, WA 98052 (US)
(72) Inventor: LI, JINYU, Redmond, 98052 (US); CHOU, JU CHI EH, Redmond, 98052 (US); FAN, RUCHAO, Redmond, 98052 (US); ZHAO, RUI, Redmond, 98052 (US)
(74) Representative: CMS Cameron McKenna Nabarro Olswang LLP

(57) **Abstract**

Methods, systems, and computer storage media for providing speech-text alignment management using a speech processing engine in an artificial intelligence system are described. The speech processing engine includes a speech-text alignment engine that operates as intermediary between raw spoken language and its corresponding textual representation, ensuring real-time processing and translation tasks. The speech processing engine utilizes a speech encoder to convert spoken language into digital signals that represent its acoustic features. The data then passes through the speech-text alignment engine, which includes a Connectionist Temporal Classification (CTC) layer for temporal and sequence alignment and a modified q-former layer for fine-tuning the speech embeddings to closely match the latent space of text embeddings used by Large Language Models (LLMs). This alignment process enables translating or transcribing spoken content into multiple languages without delay. The speech processing engine also incorporates token swapping to support adapting to various speech patterns and accents effectively.

## Description

### BACKGROUND

Users rely on Artificial Intelligence (AI) systems to efficiently retrieve and synthesize relevant information, to generate insightful responses to their queries for informed decision-making. An AI system is a platform designed to perform tasks that typically require human intelligence, such as understanding language, recognizing patterns, and making decisions, often through learning from data. An AI system can serve as a transformative tool for speech encoding and processing, optimizing real-time information retrieval and content generation. The AI system integrates a vast knowledge base from both internal and external data sources, enabling swift and accurate speech recognition and response generation. When users issue voice commands or inquiries, the AI utilizes sophisticated algorithms to analyze, filter, and rank relevant information, ensuring efficient and contextually appropriate outputs for decision-making or further processing.

### SUMMARY

Various aspects of the technology described herein are generally directed to systems, methods, and computer storage media for, among other things, providing speech-text alignment management using a speech processing engine in an artificial intelligence (AI) system. Speech-text alignment refers to the process of synchronizing spoken language input with its corresponding textual output, ensuring that the digital speech embeddings are adjusted to match the format and structure required by a text-based language model. This alignment facilitates accurate and real-time translation, transcription, or other text-related processing tasks, enhancing communication across different languages and modalities.

In a first embodiment, speech data is accessed. Using a speech-text alignment engine, aligned embeddings of the speech data are generated based on length matching and latent space matching of speech data to text data. Based on the aligned embeddings, an input sequence is generated for a Large Language Model (LLM). Using the LLM and the input sequence an output for the speech data is generated.

In a second embodiment, speech data associated with a speech-based task for a client device is communicated. Based on communicating the speech data, receiving a response associated with the speech data and the speech-based task. The response comprises an output generated using an LLM associated with a speech-text alignment engine that generated aligned embeddings of the speech data based on length matching and latent space matching of the speech data to text data. The response to the speech-based task is generated at the client device.

In a third embodiment, Automatic Speech Recognition (ASR) training data is accessed. The ASR training data comprises speech data and text data. Using a Connectionist Temporal Classification (CTC) layer, alignment information associated with a non-blank token sequence of speech data and a speech input sequence of the speech data is generated. Based on the alignment information and the speech data, a modified q-former layer is used to generated aligned embeddings. Using the aligned embeddings, an LLM is trained and deployed.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIGS. 1A and 1B are schematics of an exemplary AI system including a speech processing engine, in accordance with aspects of the technology described herein;
FIG. 2A is a block diagram of an exemplary AI system including a speech processing engine, in accordance with aspects of the technology described herein;
FIG. 2B is a flow diagram associated with an exemplary AI system including a speech processing engine, in accordance with aspects of the technology described herein;
FIG. 3 provides a first exemplary method of providing speech-text alignment management using a speech processing engine, in accordance with aspects of the technology described herein;
FIG. 4 provides a second exemplary method of providing speech-text alignment management using a speech processing engine, in accordance with aspects of the technology described herein;
FIG. 5 provides a third exemplary method of providing speech-text alignment management using a speech processing engine, in accordance with aspects of the technology described herein;
FIG. 6 provides a block diagram of an exemplary computing system suitable for use in implementing aspects of the technology described herein;
FIG. 7 provides a block diagram of an exemplary distributed computing environment suitable for use in implementing aspects of the technology described herein; and
FIG. 8 provides a block diagram of an exemplary computing environment suitable for use in implementing aspects of the technology described herein.

### DETAILED DESCRIPTION

### OVERVIEW

An AI system is a platform designed to perform tasks that typically require human intelligence, such as understanding language, recognizing patterns, and making decisions, often through learning from data. In particular, it can analyze large datasets to identify trends and provide insights that assist in strategic planning. AI system can be a type of AI agent (e.g., such as an AI assistant, including AI assistants like Microsoft COPILOT, IBM Watson Assistant, Salesforce Einstein, OpenAI ChatGPT, and Rasa) that can be deployed in a computing environment to query. By way of illustration, an AI-based digital assistant uses artificial intelligence techniques like natural language processing and machine learning to understand and respond to user queries. When a user submits a question, the assistant processes the language to interpret the intent, retrieves relevant information from its knowledge base or external sources, and generates a coherent, contextually appropriate response in natural language. This enables the assistant to provide accurate and helpful information or perform tasks efficiently, mimicking human-like interaction.

AI systems, with their ability to analyze and interpret complex data, can enable advancing speech processing technology, enabling machines to understand, generate, and respond to human language with increasing accuracy. Speech processing technology involves the analysis and transformation of spoken language into a format that can be easily interpreted by computers. It encompasses tasks such as speech recognition, where audio signals are converted to text, and speech synthesis, where text is converted back into audible speech, utilizing advanced algorithms and neural network models to handle and enhance the interactions between humans and machines. In speech processing, a common challenge is reduced effectiveness of Large Language Models (LLMs) when connecting Large Language Models (LLMs) to speech encoders to perform advanced tasks such as speech recognition, translation, or summarization. The presence of disfluencies such as "ums," "ahs," and other acoustic pauses in the transcription introduces noise that disrupts the LLM's ability to process the text effectively. While the LLM may still generate output, the effectiveness of its processing is reduced due to the lack of structured, intentional language typically expected for tasks like speech recognition, translation, or summarization.

Operationally, speech processing involves the use of speech encoders, LLMs, and adapter modules. Speech encoders are neural networks designed to convert raw audio signals into a more compact, meaningful representation. Speech encoders analyze the audio signal and extract features that represent the phonetic and acoustic properties of the speech. LLMs are trained on vast amounts of text data and learn to predict the next word in a sequence, understand context, or generate coherent text. They are structured to work with text tokens, which are far less granular than the raw audio data or even processed speech features.

Adapter modules are used to bridge the gap between the detailed output of speech encoders and the input requirements of LLMs. Adapter modules can include linear layers, convolution layers, or transformer layers. The primary function of the adapter module is to condense the output of the speech encoder. This is measured in terms of reducing the "token rate," which refers to the number of tokens (units of data) processed per second. By reducing the token rate from, for instance, 100Hz (common in raw speech data) to 25Hz or 12.5Hz, the adapter makes the data more manageable and compatible with the LLMs' processing capabilities.

Despite this reduction, the sequence length of processed speech data remains significantly longer than typical text sequences. This discrepancy arises because spoken language naturally includes pauses, elongations, and other phenomena that are not present in written text. This difference in sequence length can lead to ineffectiveness or inaccuracies when the speech data is fed into an LLM.

By way of example, when speech is transcribed into text, the process may generate a much higher token rate compared to a typical text input that an LLM would process. For example, consider the spoken sentence: "Uh, we should, like, definitely meet at the cafe around 4 PM." When transcribed, this becomes "Uh we should like definitely meet at the cafe around 4 PM."

For an LLM, tokenization typically breaks down the sentence into individual tokens, often one per word or punctuation mark. In this case, the transcription would likely be tokenized into 12 tokens, such as ["Uh", "we", "should", "like", "definitely", "meet", "at", "the", "cafe", "around", "4", "PM"]. However, when speech is directly tokenized, the process can be much more granular, breaking the spoken input down into smaller units, such as phonemes or even acoustic features that represent pauses, hesitations, or filler words. For instance, the speech might be tokenized into over 20 tokens, including phonetic representations like ["Uh", "we", "sh", "ould", "like", "def", "in", "it", "ly", "m", "ee", "t", "at", "th", "e", "ca", "fe", "ar", "ou", "nd", "4", "PM"].

This difference in tokenization results in a higher token rate for speech input compared to a standard textual transcript. Even if the speech data is processed through an adapter module that reduces temporal resolution or compresses the data, the token sequence can still be much longer than what the LLM typically handles. With a longer input sequence, the LLM may struggle to maintain meaningful context and could have difficulty accurately interpreting the speech. In turn, this can result in inaccurate or incomplete outputs, as the model may be overwhelmed by the excess information and fail to focus on the most relevant parts of the input. Thus, the token rate difference between speech and text can create challenges for LLMs, particularly when dealing with speech data that contains filler words and disfluencies. Despite efforts to compress the data, the LLM may still face difficulties in processing the larger, more complex token sequences, leading to ineffective or inefficient performance.

As illustrated, conventionally, speech processing systems are not configured with a comprehensive computing logic and infrastructure to efficiently and effectively align complex speech patterns and linguistic nuances with corresponding text outputs. Traditional speech processing systems have to manage the inherent mismatch between the lengths of speech and text sequences when attempting to integrate speech data with LLMs. This discrepancy poses a significant challenge for speech processing systems with LLMs which are designed to handle more concise and structured text data. As such, a more comprehensive speech processing system - with an alternative basis for performing speech-text alignment management - can improve computing operations and interfaces for speech processing systems.

### DESCRIPTION OF TECHNICAL SOLUTION

At a high level, a speech processing engine is provided with a speech-text alignment engine in an advanced artificial intelligence (AI) system designed to convert spoken language into textual format effectively and accurately. The speech processing engine includes a speech encoder that initially captures audio from spoken language and transforms it into digital signals, representing the various acoustic features of the speech. These digital signals, or speech embeddings, are then fed into the speech-text alignment engine. The speech-text alignment engine enhances the speech processing engine's capability to handle complex linguistic tasks.

The speech processing engine includes a Connectionist Temporal Classification (CTC) layer that is responsible for temporal and sequence alignment. It addresses the challenge of matching the varying lengths and rhythms of spoken language with the fixed and orderly nature of text sequences. By doing so, the CTC layer helps bridge the temporal gaps between what is spoken and its corresponding textual output, ensuring that words are correctly aligned with the sounds.

The speech processing engine also includes a modified q-former layer: Following the CTC layer, the modified q-former layer adjusts the processed speech embeddings to align closely with the latent space of the text embeddings used by Large Language Models (LLMs). This step ensures that the speech data is compatible with the structure and format required for text-based processing, facilitating more accurate and contextually appropriate text generation.

The speech processing engine further supports token swapping, where the speech processing engine incorporates a token swapping strategy. This method involves swapping certain speech-derived embeddings with text-derived embeddings during training. Such swapping helps the speech processing engine adapt to a wide range of speech patterns and accents, increasing its effectiveness across diverse linguistic contexts.

The integrated architecture of the speech processing engine with the speech-text alignment engine ensures that an LLM can efficiently handle real-time translation, transcription, and other text-related processing tasks. By delivering precise, contextually correct textual outputs from various linguistic inputs, this LLM greatly enhances communication across different languages and modalities, making it invaluable in settings ranging from international conferences to everyday digital assistants. In particular, the speech-text alignment engine includes a CTC layer and a modified q-former layer. The CTC layer enables alignment between speech and text sequences without the need for predefined segmentations, allowing the system to handle variable-length speech inputs more effectively. The modified q-former layer further refines the speech embeddings, adjusting them to match the latent space of text, ensuring that the speech features integrate seamlessly with text-based models. Together, these elements enhance the speech processing engine's ability to process diverse and variable speech data accurately, addressing the shortcomings of conventional systems that struggle with rigid segmentation and modality mismatches.

Operationally, speech processing engine maps speech and text into a unified space. The speech processing engine decomposes modality matching into two components: length matching and latent space matching, hypothesizing that both are necessary but individually insufficient for complete modality alignment. A speech-text alignment engine specifically designed to address the length discrepancies between speech and text sequences. The speech-text alignment engine includes a CTC (Connectionist Temporal Classification) and a modified q-former layer (mq-former). The CTC, a common loss function in ASR, computes the sequence-level alignment loss between the speech input sequence *X=(xl,x2, ...,xT)* and the text output sequence *Y=(yl,y2, ...,yU).*

Sequence-level alignment loss measures and optimizes the correspondence between input sequences (like audio frames) and output sequences (like transcribed text) without predefined alignment. CTC layer calculates possible alignments to determine the most probable transcription, helping models to accurately map variable-length and time-dependent inputs to their respective outputs. In this way, CTC layer can be used to provide alignment information for modality matching: 1) the length m of non-blank tokens, and 2) the frame coverage *cᵢ* of speech encoder outputs for each non-blank token, which facilitates alignment between the non-blank token sequence and the speech input sequence.

In the context of speech processing and automatic speech recognition (ASR), a "frame" refers to a small, fixed-duration segment of an audio signal, typically ranging from 10 to 30 milliseconds. These frames are used to capture and analyze the speech signal at intervals where the acoustic properties are relatively stable. Each frame is processed to extract features like Mel-frequency cepstral coefficients (MFCCs), which are support identifying and differentiating speech sounds. Frames often overlap to ensure continuity and prevent information loss, serving as the foundational units for both training and inference in ASR systems. It is contemplated that the number of meaningful segments (non-blank tokens) identified in the speech input, referred to as m, may differ from the actual number of words or characters in the correct transcription, known as u. This discrepancy arises because spoken language can be fluid and variable, leading to differences in how speech is segmented into tokens compared to the structured format of written text.

The information provided by the Connectionist Temporal Classification (CTC) output is addresses these differences. The CTC output facilitates effective length matching by aligning the variable length of the speech input with the fixed length of the text output. Additionally, the alignment details from the CTC output help in matching the latent spaces-the underlying representational spaces of audio and text.

With this information, the mq-former layer collects frames from the speech encoder outputs corresponding to each non-blank token to create aligned embeddings *A=(A1,A2,...,Am).* These aligned embeddings have been adjusted to accurately represent the speech data in a format that aligns with text-based data, ensuring that each segment of speech is appropriately represented.

These aligned embeddings are then concatenated with prompt embeddings *P=(p1,p2,...,pn)* to form the input sequence of length *m+n* for the LLM. Prompt embeddings are pre-defined or dynamically generated vectors that encode specific instructions or context for the LLM. These embeddings might represent commands, questions, or other textual inputs that direct the behavior of the LLM in processing the subsequent speech embeddings. The aligned speech embeddings are concatenated with these prompt embeddings to form a new input sequence. This concatenated sequence provides a comprehensive context that includes both the specific speech information and the instructions or tasks encoded in the prompts.

The LLM model is trained using next token prediction loss (with ASR transcription as the target) and the CTC loss. The LLM is trained using a next token prediction loss, which is a common approach in language models where the model is trained to predict the next word or token in a sequence. This type of loss encourages the model to learn contextual relationships between tokens in the input sequence, enhancing its ability to generate coherent and contextually appropriate outputs. In this setup, the target for the next token prediction is the correct transcription of the speech input. This means that the LLM learns to predict the textual equivalent of the speech input, effectively training it to perform speech-to-text tasks. Additionally, the CTC loss is used to further refine the model's ability to align and transcribe the speech inputs accurately. The CTC loss helps manage the alignment of input frames with their corresponding text outputs without needing pre-segmented data, making it ideal for tasks involving variable speech patterns.

To further enhance the latent space mapping, a token swapping strategy is employed where the aligned embedding *Ai* can be randomly swapped with the text embedding *Ti,* generated by processing the non-blank token c*ᵢ* through the LLM's text embedding layer. This strategy avoids the need for additional Mean Squared Error (MSE) loss between the aligned embedding *Ai* and *Ti* potentially improving performance by making the aligned speech embeddings indistinguishable to the LLM.

The LLM can be trained on Automatic Speech Recognition (ASR) data so it can perform tasks beyond just transcribing speech into text, even without having explicitly been trained on those tasks. The LLM has the ability to handle zero-shot tasks, such as translating spoken speech, summarizing audio content, or answering questions based on spoken input, without requiring additional, task-specific training. The LLM can generalize its knowledge from the ASR training data - which focuses on converting speech to text - to other language-based tasks, leveraging the inherent patterns in the speech data to produce appropriate outputs.

During inference, the LLM can perform tasks based on the speech content, such as speech translation, summarization, and question answering. For instance, in speech translation, the prompt might be structured as: "Based on the context, translate the audio into German.\n< audio>\n", where the <audio> tag represents the aligned embedding A as produced by the speech-text alignment engine.

Operationally, as the speaker talks, their speech is captured in real-time by microphones connected to the LLM system. The captured audio is then processed by the LLM's speech encoder, converting the raw audio into digital signals. These signals are passed through the speech-text alignment engine, which transforms them into aligned embeddings. This alignment ensures that the speech data is formatted correctly for the LLM to process while preserving the linguistic content.

To initiate the translation, the speech processing engine uses a pre-set prompt format that instructs the model to translate the speech into German. The <audio> placeholder in the prompt is replaced by the aligned embeddings output from the speech-text alignment engine, representing the processed speech. The LLM then receives this prompt along with the embedded speech data and, leveraging its training on language translation tasks, interprets the English speech embeddings to generate the corresponding German translation.

### EXAMPLE SYSTEMS AND RESOURCES

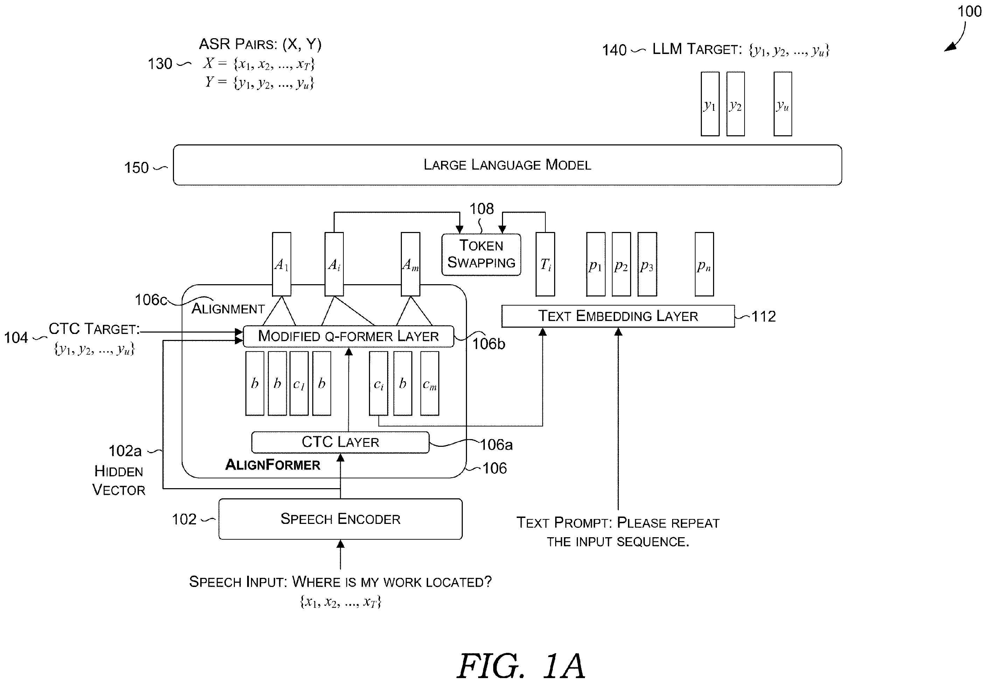

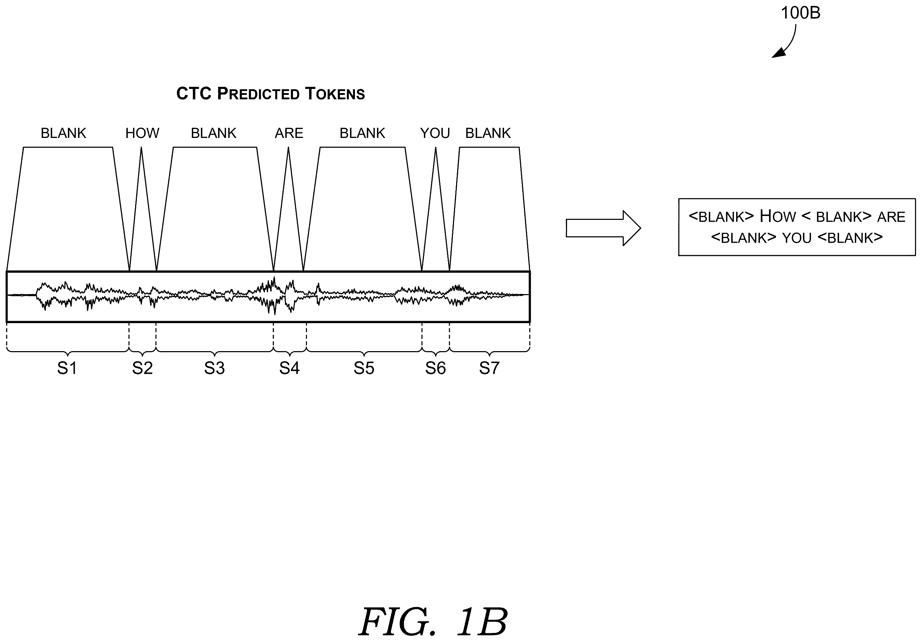

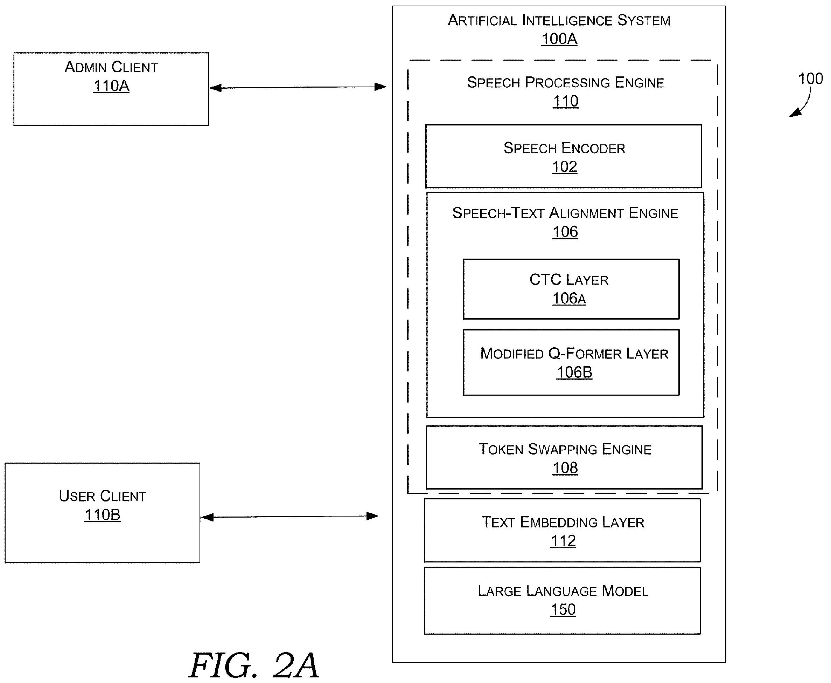

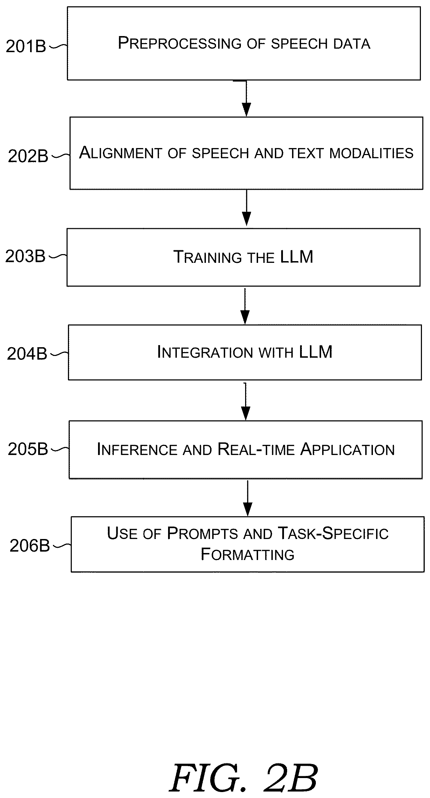

Aspects of the technical solution can be described by way of examples and with reference to FIGS. 1A, 1B, 2A and 2B. FIG. 1A illustrates a sophisticated architecture designed to enhance the integration of speech data with Large Language Models (LLMs) for improved processing and understanding in a speech processing engine. This speech processing engine leverages various components, each with specific roles that collectively contribute to the advanced functionality of speech recognition and text generation.

At a high level, during the training phase of the speech processing engine, paired speech-to-text data is provided to validate the accuracy of speech-to-text transcription. This foundational training data does not include speech translation or speech question-answering (QA) data, focusing instead on direct transcription accuracy. Effective alignment of these ensures that each speech token corresponds directly to a text token, enabling the LLM (e.g., LLM 150) to handle complex tasks like translation and question answering once fully trained.

ASR pairs 130 (Automatic Speech Recognition) are used throughout the training process to provide examples of speech inputs and their correct textual outputs. These pairs help the speech processing system learn the relationship between spoken language and text, enhancing its accuracy and efficiency.

LLM Target 140 defines the specific objectives for the LLM's output. Whether the goal is transcription, translation, or another form of text generation, this target helps guide the LLM's processing and ensures that the outputs meet the desired criteria.

One of the significant challenges faced is the length discrepancy between speech and text. Speech typically generates more data points (tokens) per second than text, leading to alignment complexities. To tackle this, the Connectionist Temporal Classification (CTC) loss is employed. Initially, speech encoder 102 is provided to begin the process. The speech encoder 102 is responsible for converting raw audio signals into digital speech embeddings. Speech encoder 102 captures the nuanced acoustic features of spoken language, turning them into a format that can be processed further by subsequent layers in the system. As the speech encoder processes the speech input, it generates a sequence of hidden vectors (also called hidden states). These vectors are the internal representations of the audio input at each time step, capturing the temporal evolution of the audio signal. Each hidden vector encapsulates information about the speech at that point in time, taking into account both the local features (such as specific phonemes or syllables) and the context provided by preceding speech segments. These vectors are considered "hidden" because they are not directly observable as part of the input or output. They are the internal states of the encoder, which are passed through the layers of the neural network.

CTC Target 104 is set up to define the desired output format for speech-text alignment engine. CTC Target 104 serves as a reference that a CTC layer of a speech-text alignment engine aims to match, ensuring that the speech-to-text conversion aligns with the accurate textual representation of the spoken input. The CTC target helps the modified q-former layer adjust the embeddings from the CTC layer to better match this target text sequence. The output format refers to the sequence of text tokens, such as words, phonemes, or characters, that the speech-text alignment generates after processing the speech input, which should match the CTC target during training.

Speech-text alignment engine includes several sub-components designed to refine and align the speech embeddings produced by the speech encoder 102. CTC Layer 106a refers to a CTC layer that applies Connectionist Temporal Classification (CTC) techniques to align the length of the speech input sequence with the text output. CTC Layer 106a addresses the discrepancies in sequence timing and length, facilitating a more synchronized mapping between spoken words and their textual equivalents. CTC Layer 106a calculates the CTC loss between the speech input and the target text, using this data to align the speech and text effectively. CTC Layer 106a's output provides detailed alignment information, indicating where the acoustic boundaries of each text token are within the speech signal.

With reference to FIG. 1B, FIG. 1B visually represents the output (i.e., CTC predicted tokens) from a speech processing engine using CTC Layer 106a to decode spoken language. The illustration (i.e., CTC Speech-to-Text decoding visualization 100B) shows how the CTC Layer 106a processes a simple spoken phrase, such as "How are you," into discrete tokens, each associated with a segment number (e.g., S1 - S7) representing a segment of the audio input.

CTC Speech-to-Text decoding visualization 100B includes an illustration showing a sequence of labeled tokens along a timeline, corresponding to segments associated with frames of processed audio data. Each token either represents a recognized word from the speech input or a "blank" token that CTC uses to handle ambiguities or separations in speech. The tokens are aligned horizontally to show the sequence derived from the audio input.

Blank (S1) - CTC Speech-to-Text decoding visualization 100B with a "blank" token at segment S1, indicating that the speech processing engine has not yet detected a clear word at the beginning of the audio segment. This "blank" could represent a pause before the speaker starts talking, or it may simply indicate that the model is unsure about the content at this point in the audio.

How (S2) - The next token is "How" at segment S2, showing that the model has recognized the first word of the phrase. This token corresponds to a segment of the audio where the word "How" was clearly spoken and successfully identified by the model.

Blank (S3) - Another "blank" follows, labeled at segment S3, likely representing the brief pause between the words "How" and "Are." These "blank" tokens are allow the model to distinguish between separate spoken words and to deal with the natural pauses in speech.

Are (S4) - The word "Are" appears at segment S4, indicating that the model has continued to accurately transcribe the speech. This token is another clear identification of a word within the spoken phrase.

Blank (S5) -As with previous words, a "blank" at segment F5 follows "Are," providing space between "Are" and the next word, handling the pause or any uncertainty in speech detection.

You (S6) - The word "You" is detected and displayed at segment S6, completing the known phrase "How are you." This shows the model's capability to capture and transcribe the spoken words into textual output accurately.

Blank (S7) - The sequence concludes with a "blank" at segment S7, which might represent the end of the spoken phrase or a final pause after the word "You."

CTC Speech-to-Text decoding visualization 100B exemplifies how the CTC approach in speech recognition models effectively handles and decodes continuous speech into distinct, understandable pieces of text. It shows the interleaving of recognized words with 'blank' tokens that help manage the segmentation of speech, reflecting the model's ability to deal with both the clarity and ambiguities of natural language.

Turning to FIG. 1A, tokens include blank tokens and non-blank tokens, represented as *b,* and *cᵢ,* respectively. The *cᵢ* represents the number of audio frames or the range of frames that are associated with each non-blank token identified by the CTC algorithm during the decoding process. In simpler terms, *cᵢ* which segments of the continuous audio input are covered by or correspond to each detected non-blank token. The output from the CTC layer typically shows a sequence that might start with *"b, b, cᵢ, b, "* among others. For the token *cᵢ* its acoustic boundary is delineated by the positions of the adjacent *"b"* tokens and the *cᵢ* token itself.

It is contemplated that CTC Layer 106a employs a dynamic window, which adjusts based on the actual acoustic information for each text token, allowing for more flexible and precise alignment between speech and text. CTC Layer 106a dynamic window processing allows adjusting the interpretation different parts of the speech input based on the actual content and structure of the speech.

A dynamic window adjusts its size and location over the speech sequence dynamically. Instead of processing fixed lengths of audio data, the window expands or contracts to encompass varying amounts of speech information depending on the complexity, speed, and clarity of the spoken words. By adapting to the actual acoustic features and linguistic content, the dynamic window can more accurately align speech data with corresponding textual data. For example, in a fast-spoken sentence, the window might widen to capture more audio data for a comprehensive analysis, whereas, for a pause or a slow phrase, it might narrow down, focusing on smaller segments of sound.

In utilizing the CTC Layer 106a, the dynamic window facilitates the identification and classification of speech tokens (like words or phonemes). The CTC Layer 106a uses the information within the window to predict the most likely textual output for that segment of speech. This prediction includes placing "blank" tokens where no direct text equivalent is present, helping to delineate boundaries between spoken words.

The use of a dynamic window enhances the efficiency of speech-to-text conversion systems. It ensures that each segment of speech is analyzed with an appropriate level of detail, reducing errors in transcription and improving the overall quality of the text output. This means that less error correction is needed later, saving time and computing power that would otherwise be spent on fixing mistakes. Moreover, it allows the system to handle diverse speech patterns, accents, and speeds effectively by adjusting in real time to the changes in spoken input. The ability to adjust in real time helps a speech processing engine avoid unnecessary delays or lag, which keeps the overall processing time short and the system more responsive. This can be especially important in applications requiring fast feedback, such as live transcription or interactive voice systems.

Modified q-former layer 106b, following the CTC Layer 106a, takes the speech tokens, such as 100 tokens per second, and condenses them through a modified attention mechanism, potentially reducing them to a more manageable number like three tokens per second. By performing a weighted summation or averaging of the speech information within these acoustic boundaries, the modified q-former Layer 106b can align the length of the speech sequence with that of the text sequence.

After summarizing the tokens, the lengths of the speech and text sequences are matched. Modified q-former Layer 106b generates aligned speech embeddings and modifies them to better match the embedding space used by the LLM. Modified q-former Layer 106b, ensures that the features from the speech are compatible with the text processing requirements of the LLM. The hidden vectors 102a are passed along to modified q-former layer 106b for further processing. In the modified q-former layer 106b, the information is aligned with the target text (through CTC loss and other mechanisms) and is used to generate the final output, such as a transcription or response.

Alignment 106c involves the actual alignment process where the embeddings adjusted by the modified q-former are fine-tuned to ensure that they seamlessly integrate with the text embeddings, preparing them for accurate text generation. Latent space matching is based on the vectorized representation of the text data, which is transformed into a shared latent space to facilitate alignment with the speech data. The text data is typically converted into text embeddings, which are numerical vectors representing the semantic and syntactic features of the text. These text embeddings are then mapped into a shared latent space, a high-dimensional vector space where both speech data and text data can be represented similarly. Speech data, after being processed through the speech encoder into speech embeddings, is also mapped into this same shared latent space. Latent space matching ensures that both the speech embeddings and text embeddings are aligned in this shared space, allowing the LLM to process them in a unified manner.

The training strategy for integrating the speech-text alignment engine with an LLM involves a multifaceted approach to optimize both the alignment and the functionality of the speech processing when handling speech data. This strategy utilizes a combination of next token prediction loss and CTC loss, complemented by a token swapping method. Next token prediction loss is a training objective where the model is tasked with predicting the next token in a sequence, optimizing the model's ability to generate contextually accurate outputs based on prior tokens. CTC loss is used in speech recognition to align input sequences (like audio frames) with output sequences (like text), allowing the model to predict text without pre-segmented data by accounting for varying input lengths and sequence alignments.

Next token prediction loss is used in training LLMs and is used to fine-tune the model on the specific task of predicting the next token in a sequence. For speech-to-text tasks, this involves the model learning to predict the next word based on the previous context, which in this case includes both previous words and processed speech data. By applying next token prediction loss, the model is continuously refined to improve its accuracy in generating text outputs that are coherent and contextually relevant based on the inputs it receives from the speech encoder and the speech-text alignment engine.

The CTC loss supports aligning the variable-length input sequences (from the speech encoder) with their corresponding fixed-length text outputs. It effectively manages the alignment without requiring explicit segmentation of the input data, which is especially valuable in speech recognition where the exact boundaries of spoken words can be ambiguous. CTC loss calculates the probabilities of all possible label sequences given the input sequence, allowing the system to estimate the most likely textual representation of the speech input. This loss helps the system learn to map extended speech inputs to their correct textual outputs, even when there are discrepancies in length and pacing between the spoken and written forms.

Token swapping engine 108 is provided to further refine the LLM's ability to handle varied speech inputs and enhance its generalization capabilities, token swapping engine 108 is implemented. This technique involves swapping certain speech-derived embeddings with text-derived embeddings from the text embedding layer 112, which helps the speech processing system to learn to treat speech and text embeddings interchangeably without losing contextual accuracy. Operationally, *cᵢ* is transformed to *Tᵢ* text-derived embedding via the text embedding layer 112. In this way, text embedding layer 112 operates to process textual data to create embeddings that are used both for training the LLM and for the token swapping process. The processed output results in both the speech and text sequences for further processing or output generation. The matched sequences enable full leveraging of the language model's capabilities for both speech and text applications.

By integrating these elements, the training strategy ensures that the model not only learns to accurately transcribe speech into text but also becomes adept at dealing with the natural variability and complexity of spoken language. This training approach enables the LLM to perform sophisticated tasks with speech data, such as translation, summarization, and question answering, directly in zero-shot or few-shot settings without needing extensive task-specific training.

During the inference phase, the speech processing engine that integrates the speech-text alignment engine with the LLM is deployed to perform various speech-based tasks. This process involves using the trained model to interpret and respond to new speech inputs in real-time or near-real-time. Here's how the inference stage and the application stage function:

At this stage, the model has already been trained to handle the complexities of converting speech to text using the speech-text alignment engine, CTC loss, and token swapping strategies. During inference, the system leverages this training to accurately process incoming speech data, generating outputs that are aligned with the tasks it's been configured to perform.

When speech input is received, it first passes through the speech encoder, which converts the raw audio into a digital format that represents the spoken content. The speech-text alignment engine then processes these digital signals to align the speech data with the LLM's text processing capabilities, ensuring that the embeddings are suitable for text-based interpretation and response.

The integration of the speech-text alignment engine allows the LLM to extend its capabilities to speech-based applications traditionally handled by separate speech-specific models. This includes tasks like speech translation, summarization, and question answering. For instance, if the task is to translate spoken language from one language to another, the system uses the processed embeddings from the speech-text alignment engine as input to the LLM, which then translates the content based on the learned language models. In the case of summarization, the model condenses the main points of a speech into a brief text summary. For question answering, the system interprets the query from the speech input and generates an appropriate answer in text form.

Prompt format is used in directing the LLM's response to the input it receives. They frame the task for the model, guiding it in generating the correct type of output. An example of a prompt format might be, "Based on the context, translate the audio into German.\n< audio>\n", where the <audio> tag is replaced by the actual audio data processed by the speech-text alignment engine. This tells the LLM to focus on translating the input speech into German.

The inference phase is associated with some of the practical benefits of the speech processing engine, demonstrating the model's ability to perform complex linguistic tasks based on speech inputs. This capability significantly enhances user interaction with technology, making it more accessible and effective for a variety of applications in diverse environments. By way of example, a user is interacting with a voice-activated assistant application on their smartphone that is powered by the trained Large Language Model (LLM). The user initiates a request by speaking, "What's the weather like today?" The system captures the spoken query through the phone's microphone, and the speech processing engine converts the audio into digital embeddings. These embeddings are processed by the speech-text alignment engine, which aligns the speech data with text embeddings, ensuring they are in the same format for further analysis.

Once processed, the query is passed to the LLM, which uses its training to generate an accurate and contextually relevant response, such as "The weather today is sunny with a high of 75°F." The LLM then translates its output into text that is communicated to a user. The system seamlessly handles the transition from speech input to text-based processing and back to speech output, providing an efficient and natural user experience. It is contemplated that a text output (e.g., text-based LLM output) of the LLM can be converted into speech using a text-to-speech (TTS) system, which processes the text and generates an audio signal that mimics human speech. This audio is then transmitted to a device, such as a smartphone or smart speaker, which plays the speech through its audio output, allowing the user to hear the response.

With reference to FIG. 2A, FIG. 2A, illustrate a cloud computing system 100 including Artificial Intelligence system 100A, speech processing engine 110, speech encoder 102, speech-text alignment engine 106, token swapping engine 108, text embedding layer 112, LLM 150, admin client 110A, and user client 110B.

Cloud computing system 100 provides the infrastructure for distributing computational tasks, managing resources, and ensuring scalability. Cloud computing system 100 ensures that speech processing tasks are executed in parallel across multiple nodes, enabling the system to process large volumes of speech data efficiently and in real time.

AI system 100A is designed to handle large-scale speech recognition and natural language processing tasks, leveraging cloud computing for scalability and distributed processing. AI system 100A integrates several key components, each with specific responsibilities, to provide accurate and efficient speech-to-text conversion, making use of advanced artificial intelligence techniques.

AI system 100A can be accessed by two types of clients: the admin client 110A and the user client 110B. The admin client 110A is used by system administrators to monitor, configure, and maintain the AI system 100A. Admin client 110A provides tools for system diagnostics, user management, and performance tracking. The user client 110B allows end users to interact with the AI system 100A, submitting audio inputs for processing and receiving the output in text form, such as transcriptions, translations, or responses to spoken queries.

AI system 100A provides an operating environment that facilitates the orchestration of operations for speech-text alignment management. AI system 100A manages data flow, decision-making processes, and facilitates communication between the various components of the system. AI system 100A is responsible for directing the flow of speech data through the processing pipeline, ensuring that the audio input is efficiently converted into text, and performing any additional tasks such as translation, summarization, or question answering.

Speech processing engine 110 is the first point of contact for the incoming speech data. Speech processing engine 110 is responsible for handling raw audio input, preparing it for further processing, and converting it into a suitable format for analysis. Speech processing engine 110 interfaces directly with the speech encoder 102, which is a specialized module for extracting acoustic features from the audio input.

Speech encoder 102 processes the raw audio and converts it into a series of feature vectors or embeddings. These embeddings represent the acoustic properties of the speech and are typically in the form of short-time Fourier transforms or Mel-frequency cepstral coefficients (MFCCs). The speech encoder can use a neural network, such as a multi-layer Transformer or RNN, to process raw audio features (like MFCCs) and convert them into hidden vectors. These hidden vectors capture the acoustic properties of speech, such as phonemes and contextual information, by progressively refining the representation through multiple layers of the network. These hidden vectors are then used by subsequent components (like the modified q-former layer) to align the speech data with the corresponding text. Speech encoder 102 breaks the audio into frames, which are small, manageable segments that capture the temporal and spectral properties of the spoken words. These feature vectors serve as the foundation for later processing by a CTC layer.

Next, the speech-text alignment engine 106 is responsible for aligning the speech features with the expected text output. speech-text alignment engine 106 consists of two major layers: the CTC Layer 106a and the modified q-former Layer 106b. The CTC Layer 106a is the key to sequence alignment in speech recognition. CTC Layer 106a enables the speech processing engine 110 to align speech data (a sequence of audio frames) with corresponding text tokens (such as words or phonemes), even when there is no predefined alignment between the speech input and text output. The CTC Layer 106a calculates the likelihood of each possible transcription by considering all possible alignments of the speech data to the target text sequence. This allows for flexibility, as the speech can vary in speed, pronunciation, or clarity, and the CTC Layer 106a can still correctly identify the corresponding text tokens.

The modified q-former Layer 106b then refines the embeddings produced by the CTC Layer 106a. The modified q-former Layer 106b enhances the speech token representations by further adjusting them to better fit the text-based language model. The modified q-former Layer 106b adapts the speech-derived embeddings into a format that is closer to the latent space of text, making the transition from speech data to text data smoother and more accurate.

Token swapping engine 108 is designed to enhance the integration of speech and text data within the speech processing engine. Token swapping engine 108 facilitates the alignment between speech-derived embeddings and text embeddings by randomly swapping the speech token embeddings with their corresponding text embeddings during the training process. In this mechanism, the aligned embedding *Aᵢ* which is generated from processed speech data through components like the speech-text alignment engine 106, is paired with the text embedding *Tᵢ* generated by processing the non-blank token *cᵢ* through the text embedding layer 112. These two embeddings represent the same underlying linguistic content but come from different modalities: one from speech (audio-derived) and the other from text (textual data). By randomly swapping speech tokens with corresponding text tokens, the model is trained to view both modalities as interchangeable, reducing any biases that may arise from the speech tokens being treated differently from text tokens. This step is key in helping the speech processing engine 110 integrate both speech and text effectively, ensuring that the model can generalize across modalities.

Additionally, this token swapping approach removes the need for a traditional Mean Squared Error (MSE) loss between the aligned embedding *Aᵢ* and text embedding *Tᵢ,* which is typically used to ensure that the embeddings are similar in the latent space. The token swapping engine enhances model performance by making the aligned speech embeddings indistinguishable from text embeddings, thus improving the speech processing engine's ability to generalize across different types of input data and yielding more accurate results in tasks such as speech-to-text conversion, translation, and summarization.

The LLM 150, or Large Language Model, processes the final embeddings. Trained on vast amounts of text data, the LLM performs a variety of tasks such as generating text, translating, summarizing, or answering questions. LLM 150 takes the processed embeddings-now in a uniform format that combines both speech and text-and uses its trained knowledge to produce contextually relevant and coherent outputs based on the provided input. These embeddings represent the data in a way that the LLM 150 can process, maintaining a consistent format for further analysis and generation.

Together, these components form an integrated AI system 100A capable of processing speech data at scale, using a combination of advanced AI techniques and cloud computing infrastructure to convert spoken language into useful textual outputs. AI system 100A can be applied to a variety of real-world scenarios, including live transcription, real-time translation, and interactive virtual assistants, providing accurate and efficient speech processing across different languages and environments.

Utilizing the token swapping strategy during the training of the LLM reduces the computational load and costs compared to traditional methods that might use more complex and computationally expensive loss functions. This makes it easier to scale the system for use in global settings, such as multinational conferences or customer support in multiple languages.

Speech processing engine facilitates a more dynamic and interactive meeting experience, allowing participants to engage in their native languages without language barriers, thereby enhancing communication efficiency and inclusivity.

With reference to FIG. 2B, illustrates a flow chart 200B associated with providing a speech processing engine in accordance with embodiments described herein. The technical solution of the speech processing engine can be explained by way of steps and an example speech processing scenario. The technical solution involves the integration of a speech-text alignment engine with a Large Language Model (LLM) to handle speech data effectively. A step-by-step explanation and implementation of this technical solution includes:

Step 201B: Preprocessing of Speech Data - Converting raw audio inputs into a digital format suitable for processing. Using a speech encoder spoken language is transformed into a series of digital signals or embeddings that represent the audio's acoustic features. For example, Wav2Vec 2.0 leverages self-supervised learning to process raw audio and generate embeddings, which can be fine-tuned for tasks like automatic speech recognition (ASR) using the Hugging Face library. Another example is DeepSpeech, an ASR system that uses a deep neural network to convert spoken words into text, providing both transcription and acoustic feature embeddings via its open-source TensorFlow implementation.

Step 202B: Alignment of Speech and Text Modalities - Address mismatch between the length and structure of speech data and text data. Using the speech-text alignment engine, a CTC (Connectionist Temporal Classification) layer is responsible for handling sequence alignment and length adjustment, providing alignment information; and a modified q-former layer (mq-former) is responsible for adjusting the embeddings to ensure they match the LLM's expectations for text data.

Step 203B Training the LLM- Optimize the LLM to understand and process the aligned speech embeddings effectively. Train the model using: next token prediction loss to enhance the model's ability to predict subsequent parts of the text accurately. CTC loss is employed to reinforce the alignment between the input speech data and the expected textual output. A token swapping strategy is employed to introduce variability and robustness, helping the model handle real-world variations in speech data.

Step 204B: Integration with LLM - Combine the processed and aligned speech data with the LLM's capabilities. Concatenate the aligned embeddings from the speech-text alignment engine with prompt embeddings or directly feed them into the LLM, ensuring that the model can interpret and respond based on these inputs.

Step 205B: Inference and Real-time Application: Utilize the trained model to perform specific speech-based tasks. Apply the model in real-world applications such as: Speech translation, where the model translates spoken input into a different language; Speech summarization, where the model condenses spoken content into a shorter written form; and Speech-based question answering, where the model provides answers to questions posed in spoken form.

Step 206B Use of Prompts and Task-Specific Formatting: Guide the LLM to generate appropriate responses based on the task. Use structured prompts to direct the LLM's output, specifying the task (e.g., translation, summarization) and providing a format for the response.

This high-level overview outlines the major steps involved in implementing a technical solution that integrates speech processing capabilities with LLMs. The process involves data transformation, alignment techniques, and training strategies to ensure that the system can effectively handle and respond to speech inputs across various applications.

By way of example, speech data is first captured by a speech encoder that processes audio associated with one or more spoken languages. The speech encoder transforms the audio into speech data, which includes of speech embeddings representing the acoustic features of the speech, such as pitch, rhythm, and phonetic components. These speech embeddings serve as the foundation for further processing.

The next step involves using a speech-text alignment engine to generate aligned embeddings of the speech data. The alignment process occurs through two key techniques: length matching and latent space matching. Length matching is executed using a Connectionist Temporal Classification (CTC) layer, which calculates alignment information between the non-blank token sequence (representing actual words or phonemes) and the speech input sequence. The CTC layer handles the length of non-blank tokens and frame coverage, determining which segments of the speech correspond to each recognized token.

Latent space matching is handled by a modified q-former layer, which further refines the aligned embeddings. This layer generates embeddings based on the frames corresponding to the non-blank tokens of the speech data, ensuring the embeddings are aligned with the model's latent space, where both speech and text representations are integrated seamlessly.

Once the aligned embeddings are generated, they are concatenated with prompt embeddings. Prompt embeddings are vectors that encode specific instructions or context, helping the Large Language Model (LLM) understand the task at hand. This concatenated sequence forms the input for the LLM, which processes the embeddings to perform tasks like speech translation, speech summarization, or speech-based question answering.

The LLM, trained using next token prediction loss and CTC loss, is designed to generate the appropriate text-based responses. During training, a token swapping technique can be optionally used, where speech-derived embeddings are randomly swapped with their corresponding text embeddings, improving the model's ability to treat both speech and text as interchangeable.

In the inference phase, the LLM processes the input sequence and generates a text-based output completing the task. The speech-based task, such as translating speech or answering a spoken question, is fulfilled by this end-to-end pipeline, where the system can seamlessly translate spoken input into meaningful output.

The entire system is trained using ASR training data, comprising paired speech data and text data, processed by the CTC layer to generate alignment information. The aligned embeddings are used to train the LLM, enabling it to handle speech tasks effectively. After training, the LLM is deployed for use in real-time applications, where it can generate responses based on a wide variety of speech-based inputs, adapting to diverse speech patterns and tasks.

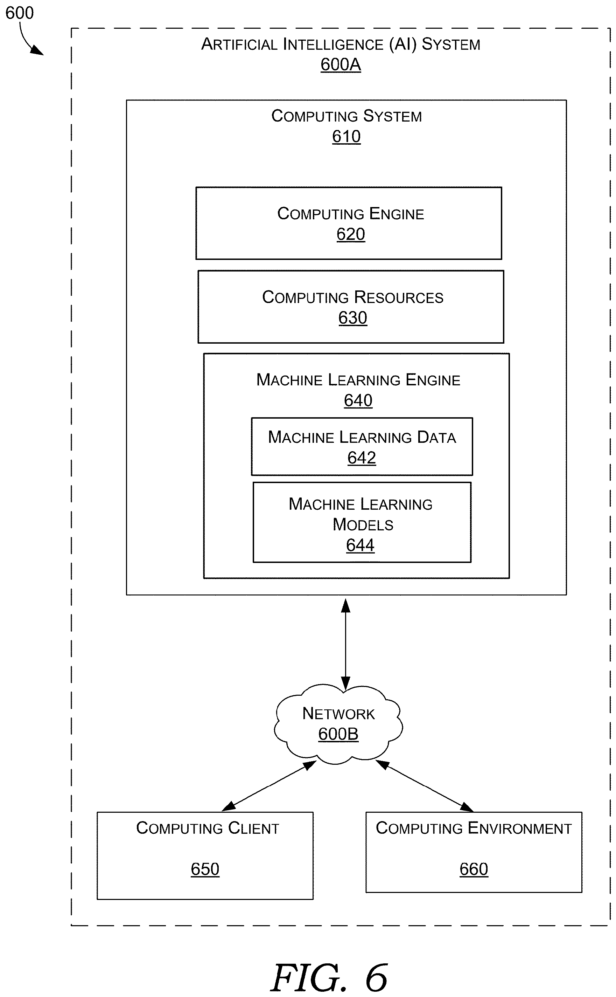

Aspects of the technical solution have been described by way of examples and with reference to FIGS. 1A, 1B, and 2. FIG. 1A is a block diagram of an exemplary technical solution environment, based on example environments described with reference to FIGS. 6, 7 and 8 for use in implementing embodiments of the technical solution are shown. Generally the technical solution environment includes a technical solution system suitable for providing the example cloud computing system 100 in which methods of the present disclosure may be employed. In particular, FIG 1A illustrates a high-level architecture of the cloud computing system 100 in accordance with implementations of the present disclosure, among other engines, managers, generators, selectors, or components not shown (collectively referred to herein as "components").

### EXAMPLE METHODS

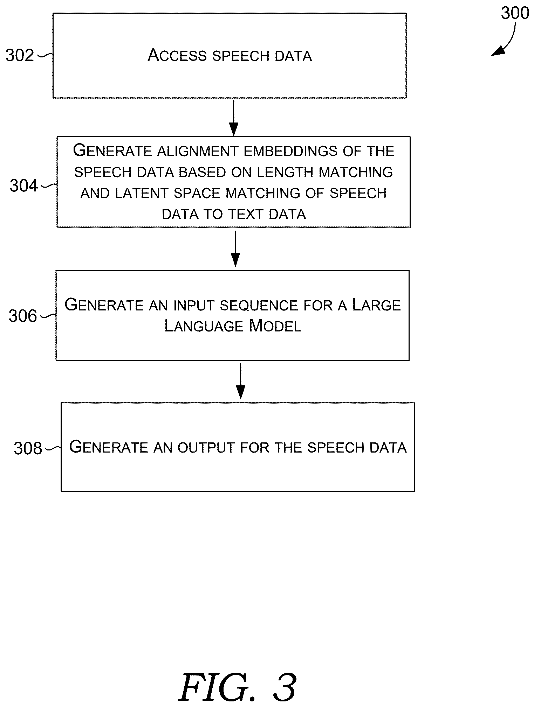

With reference to FIGS. 3, 4, and 5, flow diagrams are provided illustrating methods for providing speech-text alignment management using a speech processing engine in an artificial intelligence system. The methods may be performed using the design system described herein. In embodiments, one or more computer-storage media having computer-executable or computer-useable instructions embodied thereon that, when executed, by one or more processors can cause the one or more processors to perform the methods (e.g., computer-implemented method) in the design system (e.g., a computerized system).

Turning to FIG. 3, a flow diagram is provided that illustrates a method 300 for providing speech-text alignment management using a speech processing engine in an artificial intelligence system. At block 302, access speech data. At block 304, generate alignment embeddings of the speech data based on length matching and latent space matching of the speech data to text data. At block 306, generate an input sequence for a Large Language Model (LLM). At block 308, generate an output for the speech data.

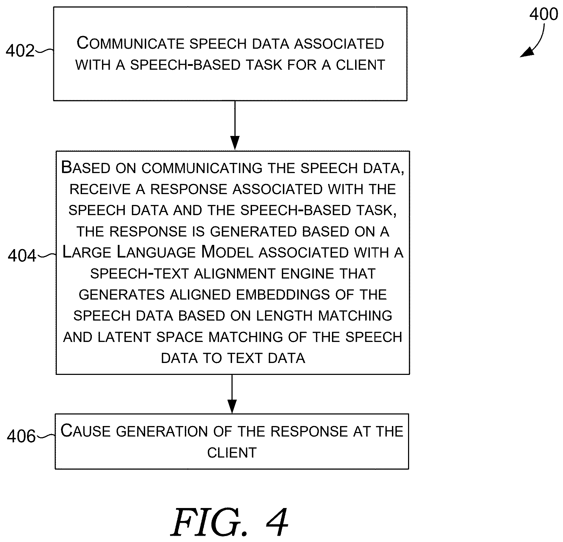

Turning to FIG. 4, a flow diagram is provided that illustrates a method 400 for providing speech-text alignment management using a speech processing engine in an artificial intelligence system. At block 402, communicate speech data associated with a speech-based task for a client. At block 404, based on communicating the speech data, receive a response associated with the speech data and the speech-based task. The response is generated based on a Large Language Model associated with a speech-text alignment engine that generates aligned embeddings of the speech data based on length matching and latent space matching of speech data to text data. At block 406, cause generation of response at the client.

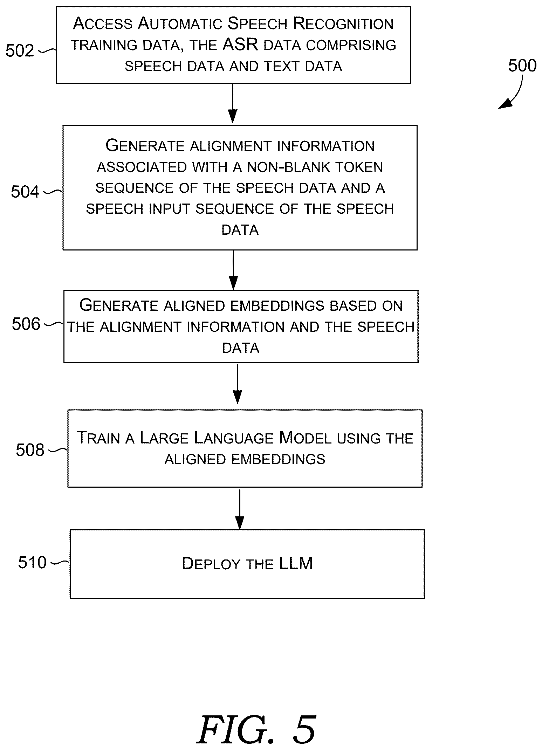

Turning to FIG. 5, a flow diagram is provided that illustrates a method 500 for providing speech-text alignment management using a speech processing engine in an artificial intelligence system. At block 502 access Automatic Speech Recognition training data. The ASR training data comprising speech data and text data. At block 504, using a Connectionist Temporal Classification (CTC) layer, generate alignment information associated with a non-blank token sequence of the speech data and a speech input sequence of the speech data. At block 506, using a modified q-former layer, generate aligned embedding based on the alignment information and the speech data. At block 508, train a Large Language Model (LLM) using the aligned embeddings. At block 510, deploy the LLM.

### TECHNICAL IMPROVEMENT

Embodiments of the present techniques have been described with reference to several inventive features (e.g., operations, systems, engines, and components) associated with an artificial intelligence system. Inventive features described include: operations, interfaces, data structures, and arrangements of computing resources associated with providing the functionality described herein relative with reference to a speech processing engine. Functionality of the embodiments of the present invention have further been described, by way of an implementation and anecdotal examples - to demonstrate that the operations for providing the speech processing engine as a solution to a specific problem in artificial systems technology to improve computing operations in artificial intelligence systems.

Speech-text alignment engine offers several functional advantages that significantly enhance the capabilities of speech processing systems when integrated with Large Language Models (LLMs). These advantages are particularly notable in the context of extending the utility of speech-enabled applications beyond traditional Automatic Speech Recognition (ASR) tasks.

Traditionally, speech-LLM integration primarily facilitated ASR tasks, where the model's role was limited to transcribing spoken words into text. The Speech-text alignment engine, however, enables the model to engage in more complex and varied tasks such as speech translation, speech summarization, and speech-based question answering. This expansion into zero-shot capabilities-where the model performs tasks without explicit prior training on those specific tasks-demonstrates a significant leap in the application scope of speech processing technologies.

The speech-text alignment engine addresses the challenge of modality mismatch between the detailed, temporal nature of speech data and the more discrete, structured nature of text data used in LLMs. By effectively aligning these modalities through the CTC and modified q-former layers, the module ensures that the speech data is processed into a form that is more naturally compatible with the operational mechanisms of LLMs. This compatibility is crucial for the accurate interpretation and generation of text based on speech inputs.

The introduction of a simple token swapping strategy as part of the speech processing engine functionality offers a practical advantage over traditional methods that might use Mean Squared Error (MSE) loss for training. By swapping tokens to enhance alignment during training, this strategy reduces the computational overhead and simplifies the training process. This not only cuts down on training costs but also potentially increases the training speed and efficiency, making the deployment of speech-LLM systems more feasible and scalable. The speech-text alignment engine equips speech-LLM systems with the ability to handle a broader range of linguistic tasks more effectively and efficiently, transforming how such systems can be utilized in real-world applications, from automated customer support to real-time multilingual communication.

### ADDITIONAL SUPPORT FOR DETAILED DESCRIPTION

### EXAMPLE ARTIFICIAL INTELLIGENCE (AI) SYSTEM IN A COMPUTING ENVIRONMENT

Referring now to FIG. 6, FIG. 6 illustrates a computing environment in which implementations of the present disclosure may be employed. In particular, FIG. 6 shows a high level architecture of an example cloud computing platform 600, artificial intelligence (AI) system 600A, and computing system 610 that can host a technical solution environment. It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The cloud computing platform 600 provides computing system resources for different types of managed computing environments. For example, the cloud computing platform supports delivery of computing services - including compute, servers, storage, databases, networking, and intelligence. The components of cloud computing platform 600 may communicate with each other over a network 600B which may include, without limitation, one or more local area networks (LANs) and/or wide area networks (WANs).

The AI system 600A provides a specialized infrastructure designed to support the computational demands of artificial intelligence (AI) workloads, including both training and inference tasks. The AI backend network systems 600A consists of interconnected components that facilitate the efficient processing, communication, and management of data within a distributed computing environment. Operations include data processing, handling input data, intermediate results, and output data, alongside complex computations for AI tasks, communication facilitating seamless interaction among components, and resource management overseeing optimal utilization of compute nodes, accelerators (e.g., GPUs, TPUs), memory, and storage. Interfaces encompass network interfaces enabling high-speed communication between nodes, APIs providing standardized interaction methods for developers, and management interfaces for system monitoring and administration. Data support functionalities include storage, data movement, transformation, and replication with backup mechanisms, ensuring data durability and reliability. In this way, the AI backend network system serves as the backbone infrastructure for AI workloads, facilitating efficient and scalable AI processing across distributed computing environments through its comprehensive operations, interfaces, and data management functionalities.

The cloud computing platform 600 provides the foundational infrastructure and resources for deploying and managing computing workloads, including AI. AI system 600A includes specialized infrastructures tailored for supporting the unique computational demands of AI workloads. The relationship between the two involves resource provisioning, integration, orchestration, and data processing, enabling organizations to leverage cloud-based resources effectively for AI development and deployment.

The computing system 610 provides computing functionality for computing environments. For example, the computing system 610 is a platform or framework that leverages advanced technologies such as artificial intelligence (AI), machine learning (ML), data mining, and big data analytics to extract actionable insights and knowledge from large and complex datasets. In this way, the computing system 610 provides a computing environment that enables organizations to make informed decisions and optimize operations.

The computing system 610 includes a computing engine 620 that is a computing environment that supports executing computational tasks associated with the computing system 610. The computing engine 620 can be a hardware or software component that performs computational operations, such as, mathematical calculations, data processing, and algorithm execution. The computing system 610 integrates computing resources 630 into computing system 610 to effectively provide computing functionality in a computing environment.

The computing resources 630 refer to computing elements (e.g., components, capability, or entities) that collectively enable the computing engine 620 operations. The computing resources 630 encompass a spectrum of computing elements, beginning with the diverse operations the computing resources 630 can perform, ranging from complex computations to data manipulations. Interfaces, an integral part of the computing resources 630, provide the means for both user interaction and seamless integration with external systems, ensuring a dynamic and interactive computing experience. The data facet of the data computing resources 630 involves various types: input data, which is the information provided for processing; processing data, representing the data manipulated during computational tasks; and output data, the results generated by the computing engine 620. In this way, the computing resources 630 support the broader computing engine 620 and computing system 610.

Machine learning engine 640 is a machine learning framework or library that operates as a tool for providing infrastructure, algorithms, capabilities for designing, training, and deploying machine learning models. The machine learning engine 640 can include pre-built functions and APIs that enable building and applying machine learning techniques. The machine learning engine 640 can provide a machine learning workflow from data processing and feature extraction to model training, evaluation, and deployment.

Machine learning data 642 refers to the structured or unstructured information used to train, validate, and test machine learning models. This machine learning data 642 typically comprises input features (also known as independent variables or predictors) and their corresponding target values (also known as dependent variables or labels). Machine learning data 642 can come from various sources, such as databases, sensor readings, text documents, images, audio recordings, or streaming data sources. Machine learning data 642 may require preprocessing, cleaning, and transformation to ensure its suitability for training machine learning models. Additionally, machine learning data 642 is often divided into training, validation, and testing sets to assess the performance and generalization ability of trained models accurately.

Machine learning models 644 are algorithms or mathematical representations that learn patterns and relationships from the provided data to make predictions or decisions without being explicitly programmed. Machine learning models 644 models are trained using the machine learning data 642, where they iteratively adjust their internal parameters or coefficients to minimize prediction errors or maximize performance metrics. Machine learning models 644 can be classified into various types based on their learning algorithms and the nature of the problem they address, including supervised learning models (e.g., regression, classification), unsupervised learning models (e.g., clustering, dimensionality reduction), and reinforcement learning models. Once trained, machine learning models 644 can be deployed in production environments to make predictions on new, unseen data instances. Regular evaluation and monitoring of model performance are essential to ensure their accuracy, reliability, and effectiveness in real-world applications.

The computing client 650 supports access to computing system 610. The computing client 650 can be provided as a user client or an administrator client to support user and administrator functionality associated with the computing environment 660, computing engine 620, or computing system 610. The computing client 650 can also support accessing computing visualizations and causing display of the computing visualization. The computing client 650 can include a computing engine client that supports receiving computing information associated computing engine 620 output from the computing system 610 and causing presentation of the computing information. The computing information can specifically include computing visualizations associated with the computing engine 620 output.

Computing environment 660 is a computing environment that is integrated into the computing system 610. The computing environment 660 is characterized by an infrastructure, where data from various sources within the ecosystem, including servers, networks, applications, sensors, and user interactions, can be aggregated and processed by the computing system 610 to perform computing tasks. The computing environment 660 can be associated with middleware and integration layers facilitate seamless data flow, while computing infrastructure, encompassing cloud-based resources, distributed computing frameworks, and optimized storage systems, supports functionality associated with the computing.

### EXAMPLE DISTRIBUTED COMPUTING SYSTEM ENVIRONMENT

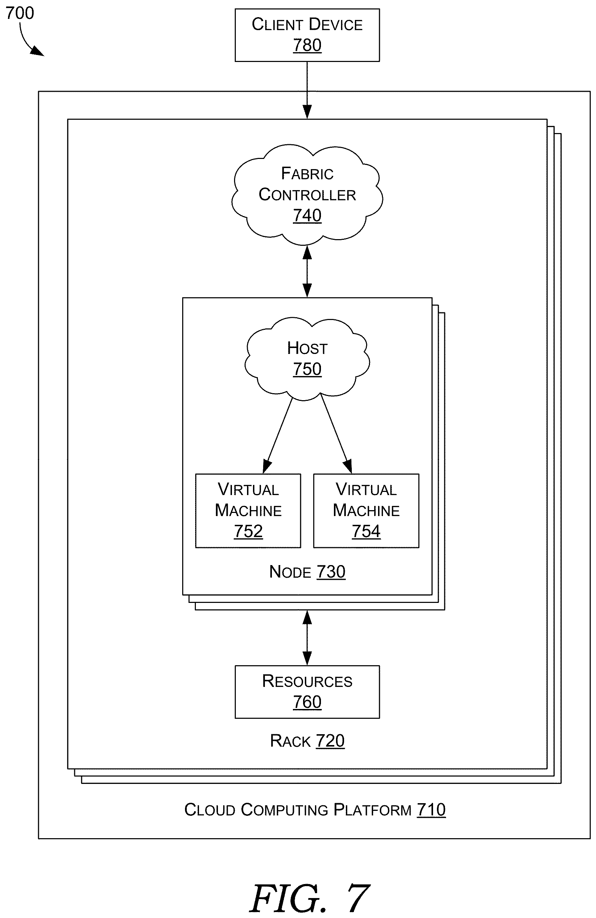

Referring now to FIG. 7, FIG. 7 illustrates an example distributed computing environment 700 in which implementations of the present disclosure may be employed. In particular, FIG. 7 shows a high level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing platform 710 in a data center can be configured to host and support operation of endpoints of a particular service application. Cloud computing platform 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 800 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### EXAMPLE COMPUTING ENVIRONMENT

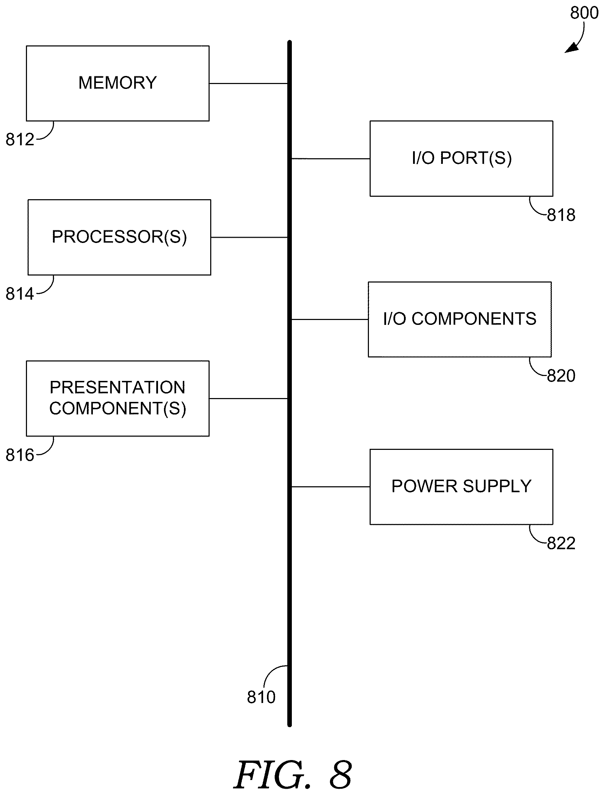

Having briefly described an overview of embodiments of the present technical solution, an example operating environment in which embodiments of the present technical solution may be implemented is described below in order to provide a general context for various aspects of the present technical solution. Referring initially to FIG. 8 in particular, an example operating environment for implementing embodiments of the present technical solution is shown and designated generally as computing device 800. Computing device 800 is but one example of a suitable computing environment and is not intended to suggest any limitation as to the scope of use or functionality of the technical solution. Neither should computing device 800 be interpreted as having any dependency or requirement relating to any one or combination of components illustrated.

The technical solution may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technical solution may be practiced in a variety of system configurations, including hand-held devices, consumer electronics, general-purpose computers, more specialty computing devices, etc. The technical solution may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present technical solution. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

Another example provides a computerized system comprising: one or more computer processors; and computer memory storing computer-useable instructions that, when used by the one or more computer processors, cause the one or more computer processors to perform operations. The operations comprise: accessing speech data; using a speech-text alignment engine, generating aligned embeddings of the speech data based on length matching and latent space matching of the speech data to text data; based on the aligned embeddings, generating an input sequence for a Large Language Model (LLM); and using the LLM and the input sequence, generating an output for the speech data.

Additionally or alternatively, in some such examples a speech encoder captures audio associated with one or more spoken languages and transforms the audio into the speech data comprising speech embeddings representing acoustic features of speech.

Additionally or alternatively, in some such examples generating the aligned embeddings based on the length matching comprises computing alignment information associated with a non-blank token sequence of the speech data and a speech input sequence of the speech data using a Connectionist Temporal Classification (CTC) layer.

Additionally or alternatively, in some such examples the length matching comprises determining a length of non-blank tokens of the speech data and a frame coverage of the non-blank tokens.

Additionally or alternatively, in some such examples generating the aligned embeddings based on latent space matching comprises generating, using a modified q-former layer, the aligned embeddings based on frames corresponding to non-blank tokens of the speech data, the latent space matching is based on vectorized representation of the text data that is transformed into a shared latent space to facilitate alignment with speech data.

Additionally or alternatively, in some such examples the LLM is trained based on speech-derived embeddings and text-derived embeddings associated with token swapping.

Additionally or alternatively, in some such examples the operations further comprising concatenating the aligned embeddings with prompt embeddings to generate the input sequence for the LLM, wherein a prompt embedding is a pre-defined or dynamically generated vector that encodes instructions or context for the LLM.

Another example provides one or more computer-storage media having computer-executable instructions embodied thereon that, when executed by a computing system having a processor and memory, cause the processor to perform operations. The operations comprise: communicating speech data associated with a speech-based task for a client device; based on communicating the speech data, receiving a response associated with the speech data and the speech-based task, wherein the response is associated with a speech-text alignment engine that generates aligned embeddings of the speech data based on length matching and latent space matching of the speech data to text data, wherein the response is generated using a Large Language Model (LLM); and generating the response to the speech-based task at the client device.

Additionally or alternatively, in some such examples the speech-based task is associated with speech translation, speech summarization, or speech-based question answering.

Additionally or alternatively, in some such examples the length matching comprises determining length of non-blank tokens of the speech data and a frame coverage of the non-blank tokens.

Additionally or alternatively, in some such examples latent space matching comprises determining frames corresponding to non-blank tokens of the speech data.

Additionally or alternatively, in some such examples the LLM is trained on next token prediction loss and CTC loss.

Additionally or alternatively, in some such examples the LLM is trained based on a token swapping technique where speech-derived embeddings are randomly swapped with corresponding text embeddings.

Additionally or alternatively, in some such examples the response is a text-based LLM output that is converted to speech.

Another example provides a computer-implemented method, the method comprising: accessing Automatic Speech Recognition (ASR) training data, the ASR training data comprising speech data and text data; using a Connectionist Temporal Classification (CTC) layer, generating alignment information associated with a non-blank token sequence of the speech data and a speech input sequence of the speech data; based on the alignment information and the speech data, using a modified q-former layer to generate aligned embeddings; using the aligned embeddings, training a Large Language Model (LLM); and deploying the LLM.

Additionally or alternatively, in some such examples the CTC supports length matching comprising determining a length of non-blank tokens of the speech data and a frame coverage of the non-blank tokens.

Additionally or alternatively, in some such examples the modified q-former layer supports latent space matching comprising determining frames corresponding to non-blank tokens of the speech data.

Additionally or alternatively, in some such examples the LLM is based on next token prediction loss and CTC loss.

Additionally or alternatively, in some such examples training the LLM comprises a token swapping technique where speech-derived embeddings are randomly swapped with corresponding text embeddings.

Additionally or alternatively, in some such examples the method further comprising concatenating the aligned embeddings with prompt embeddings to generate an input sequence for the LLM, wherein a prompt embedding is a pre-defined or dynamically generated vector that encodes instructions or context for the LLM. Example methods, systems, and computer storage media for providing speech-text alignment management using a speech processing engine in an artificial intelligence system are described herein. The speech processing engine includes a speech-text alignment engine that operates as intermediary between raw spoken language and its corresponding textual representation, ensuring real-time processing and translation tasks. The speech processing engine utilizes a speech encoder to convert spoken language into digital signals that represent its acoustic features. The data then passes through the speech-text alignment engine, which includes a Connectionist Temporal Classification (CTC) layer for temporal and sequence alignment and a modified q-former layer for fine-tuning the speech embeddings to closely match the latent space of text embeddings used by Large Language Models (LLMs). This alignment process enables translating or transcribing spoken content into multiple languages without delay. The speech processing engine also incorporates token swapping to support adapting to various speech patterns and accents effectively.

### ADDITIONAL STRUCTURAL AND FUNCTIONAL FEATURES

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technical solution is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technical solution are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technical solution may generally refer to the technical solution environment and the schematics described herein, it is understood that the techniques described may be extended to other implementation contexts.

For purposes of this disclosure the word "support" refers to provisioning of functionality, services, or assistance by a computing component or through computing operations within a broader computing system. When a computing component or set of operations supports a specific functionality, it means that it plays a role in enabling or executing that particular aspect of the computing system. This support can manifest in various ways, including the processing of data, execution of operations, management of resources, and ensuring compatibility or interoperability with other components. Additionally, support may involve providing interfaces, APIs (Application Programming Interfaces), or protocols that allow seamless interaction and integration with other elements of the computing system. The concept of support extends beyond mere functionality provision to encompass maintenance, troubleshooting, and the overall optimization of computing resources to ensure the robust and efficient operation of the computing system.

Embodiments of the present technical solution have been described in relation to particular embodiments which are intended in all respects to be illustrative rather than restrictive. Alternative embodiments will become apparent to those of ordinary skill in the art to which the present technical solution pertains without departing from its scope.

From the foregoing, it will be seen that this technical solution is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
accessing speech data;
using a speech-text alignment engine, generating aligned embeddings of the speech data based on length matching and latent space matching of the speech data to text data;
based on the aligned embeddings, generating an input sequence for a Large Language Model (LLM); and
using the LLM and the input sequence, generating an output for the speech data.

2. The system of claim 1, wherein a speech encoder captures audio associated with one or more spoken languages and transforms the audio into the speech data comprising speech embeddings representing acoustic features of speech, and/or wherein the LLM is trained based on speech-derived embeddings and text-derived embeddings associated with token swapping.

3. The system of claim 1 or claim 2, wherein generating the aligned embeddings based on the length matching comprises computing alignment information associated with a non-blank token sequence of the speech data and a speech input sequence of the speech data using a Connectionist Temporal Classification (CTC) layer, and/or
wherein generating the aligned embeddings based on latent space matching comprises generating, using a modified q-former layer, the aligned embeddings based on frames corresponding to non-blank tokens of the speech data, the latent space matching is based on vectorized representation of the text data that is transformed into a shared latent space to facilitate alignment with speech data.

4. The system of any one of claims 1 to 3, wherein the length matching comprises determining a length of non-blank tokens of the speech data and a frame coverage of the non-blank tokens.

5. The system of any one or claims 1 to 4, the operations further comprising concatenating the aligned embeddings with prompt embeddings to generate the input sequence for the LLM, wherein a prompt embedding is a pre-defined or dynamically generated vector that encodes instructions or context for the LLM.

6. One or more computer-storage media having computer-executable instructions embodied thereon that, when executed by a computing system having a processor and memory, cause the processor to perform operations, the operations comprising:
communicating speech data associated with a speech-based task for a client device;
based on communicating the speech data, receiving a response associated with the speech data and the speech-based task, wherein the response is associated with a speech-text alignment engine that generates aligned embeddings of the speech data based on length matching and latent space matching of the speech data to text data, wherein the response is generated using a Large Language Model (LLM); and
generating the response to the speech-based task at the client device.

7. The media of claim 6, wherein the speech-based task is associated with speech translation, speech summarization, or speech-based question answering, and/or wherein the response is a text-based LLM output that is converted to speech.

8. The media of claim 6 or claim 7, wherein the length matching comprises determining length of non-blank tokens of the speech data and a frame coverage of the non-blank tokens.

9. The media of claim 6 or claim 7, wherein latent space matching comprises determining frames corresponding to non-blank tokens of the speech data.

10. The media of any one of claims 6 to 9, wherein the LLM is trained on next token prediction loss and CTC loss, or wherein the LLM is trained based on a token swapping technique where speech-derived embeddings are randomly swapped with corresponding text embeddings.

11. A computer-implemented method, the method comprising:
accessing Automatic Speech Recognition (ASR) training data, the ASR training data comprising speech data and text data;
using a Connectionist Temporal Classification (CTC) layer, generating alignment information associated with a non-blank token sequence of the speech data and a speech input sequence of the speech data;
based on the alignment information and the speech data, using a modified q-former layer to generate aligned embeddings;
using the aligned embeddings, training a Large Language Model (LLM); and
deploying the LLM.

12. The method of claim 11, wherein the CTC supports length matching comprising determining a length of non-blank tokens of the speech data and a frame coverage of the non-blank tokens.

13. The method of claim 11 or claim 12, wherein the modified q-former layer supports latent space matching comprising determining frames corresponding to non-blank tokens of the speech data.

14. The method of any one of claims 11 to 13, wherein training the LLM is based on next token prediction loss and CTC loss, or wherein training the LLM comprises a token swapping technique where speech-derived embeddings are randomly swapped with corresponding text embeddings.

15. The method of any one of claims 11 to 14, the method further comprising concatenating the aligned embeddings with prompt embeddings to generate an input sequence for the LLM, wherein a prompt embedding is a pre-defined or dynamically generated vector that encodes instructions or context for the LLM.
